# EUROPEAN PATENT APPLICATION

(11) **EP 2 380 442 A2**
(43) Date of publication of application: **26.10.2011**
(21) Application number: 10010255.7
(22) Date of filing: 23.09.2010
(51) Int. Cl.: A22C 7/00

(54) **3D-food product forming apparatus and process**

(30) Priority: 23.04.2010 EP 10004318; 19.08.2010 EP 10008660
(71) Applicant: CFS Bakel B.V., 5761 EN Bakel (NL)
(72) Inventor: Van Gerwen, Hendrikus Petrus Gerardus, 5711VT Someren (NL)
(74) Representative: Wolff, Felix

(57) **Abstract**

The present invention is related to a food forming apparatus (3) to produce patties (22) with a form member (1) which comprises moulds (11) in which the patties are formed, whereas the form member is located adjacent to a pressure member (13) and is at least partially made from a porous material.

## Description

The present invention is related to a food forming apparatus to produce patties with a form member which comprises moulds in which the patties are formed, whereas the form member is located adjacent to a pressure member and is at least partially made from a porous material.

Food product forming apparatus are known from the state of the art and are used to shape food products, for example meat, fish, spinach or cheese. This apparatus normally comprises either a form plate which is moving reciprocally from a fill-position to a discharge-position. In a different embodiment, the machine comprises a rotating form drum in which the products are formed and subsequently discharged. In many cases, the mould, in which the food products are formed into patties is at least partially made of a porous material. This porous material has the advantage, that the mould can be vented during filling and that a medium, for example air, can be discharged through the porous material in order to remove the formed patties from the mould. In most cases, these patties are shaped disc-like; i.e. 2-D-shaped. However, there is an increasing demand to provide patties with a more complex structure, 3D-structure.

It was therefore the objective of the present invention to provide a food product forming apparatus and a process in which more complex patties can be produced.

The problem is solved with a food forming apparatus to produce patties with a form member which comprises a mould in which the patties are formed, whereas the form member is located adjacent to a pressure member and is at least partially made from a porous material and the pressure element is 3D-shaped.

The present invention relates to a food product forming apparatus. This apparatus comprises a form member in which the food product, for example minced meat, is brought into the desired shape. This form member can be either a form plate or a form drum. In case the form member is a form plate, this plate moves reciprocally from a fill-position to a discharge-position. In case the form member is a drum, this drum rotates continuously. In one angular position of the drum, moulds in the drum are filled with the food and in another angular position, the formed patties are discharged.

According to the present invention the form plate is located adjacent to a pressure member and preferably between a de-aeration member, preferably a plate or a drum and the pressure member. The de-aeration member allows the venting of the mould, while it is being filled. Then de-aeration member can also be used to connect the mould to a pressure medium source, for example to eject the patties from the mould. The person skilled in the art understands that the venting-function and the connection to a pressure medium source can also be integrated into the form member. The de-aeration member is normally located on the opposite side of the form member relative to side, from which it is filled, while the pressure member and the means to fill the mould are located on the same side. The pressure member is preferably used to avoid leakages during the filling, of the food mass into the mould, to compress the food product at least slightly in the mould and/or to cut off the material in the mould from the food mass supply in a fill chamber.

In order to form the food product into patties, the form member comprises at least one, preferably a plurality of moulds, which are at least partially made of a porous material. The porous material has the advantage, that the mould can be vented during filling of the mould to remove entrapped air and/or to supply a pressurized medium, for example air, to eject the formed patties out of the mould. Preferably, at least the bottom of the mould is made of a porous material.

The form member can be made entirely out of a porous material or the form member can comprise one or more porous inserts. These inserts can comprise one or more moulds. The porous structure can be made out of sintered material, for example stainless steel, plastic, aluminum, ceramics and/or a combination of these materials. The same is true for the porous inserts. The mould can consist of a porous side wall and a porous bottom wall or only of a porous bottom wall. The pore cross-section of the porous material is preferably designed such that it is permeable for gas, preferably air. Preferably the pore diameter is from 2 to 40 microns. When only using a permeable bottom wall, the other surfaces of the mould are preferably made of an anti-stick material, like Teflon, and/or coated with such a material. Preferably, the mould allows the forming of a 3D-shaped product; i.e. a product that does not comprise a constant thickness over its entire extension. Thus, the bottom of the mould is preferably not flat but 3D-shaped.

The porous structure can be made for example by milling, laser drilling or spark erosion or sintering. In that way, the pores will not be closed or only closed to a very small degree during is manufacturing.

In order to provide a high capacity, the inventive food product forming apparatus preferably comprises multiple moulds arranged in a row. Even more preferably, the inventive apparatus even has multiple rows, each row comprising a plurality of moulds. These rows can be in a continuous process filled one after the other. In a discontinuous process, when for example a reciprocating plate is used, two or more rows are preferable fitted simultaneously.

As already mentioned above, the moulds are preferably connected to the ambient and/or a pressure medium supply, for example a gas and/or water supplies. This takes preferably place via the de-aeration member. The moulds in one row are preferably connected, for example via a channel to the ambient and/or to the pressure medium supply. The connection can be part of the form member itself, in the de-aeration member, in a manifold, which is connected to the form member or in the adjacent surface between the form member and the manifold or the de-aeration member. When using multiple rows of moulds in a form member, especially for large capacities, all moulds can be connected with each other. However, a separation of the ventilation and/or pressure medium supply per row is preferred in order to provide a homogenous supply of the pressure medium.

After the patties have been formed they have to be removed from the moulds. This is preferably done by ejecting a gas, preferably air, through the porous structure of the mould. Preferably, the ejection is an impulse. In case air is not sufficient to remove all food products from the mould, preferably water or another fluid is preferably inserted most preferably sprayed into the mould prior to its filling. In case that the form member is a plate, this can be done during the ingoing stroke of the plate; i.e. during the movement of the plate from the discharge to the filling position. With this fluid, a thin film will be created on the bottom wall and/or on the side walls of the moulds, which at least partially prevents the food product from sticking against the wall.

The product to be formed is pressed from a fill chamber into the moulds of the form member. During this filling air entrapped in the form plate mould will escape via the porous structure of the mould into the atmosphere.

An option when processing an extremely sticky food product is to blow air with low air pressure in the mould or to avoid, that the mould is vented so that a film of air is at least locally created between the food product and the mould.

In case the formed patty is a thin product, preferably the air ventilation is closed and/or a negative pressure is created between the mould and the patty. This hinders the patty to fall out of the mould during the movement of the form member.

In case the mould comprises a porous bottom and a porous sidewall, preferably the bottom and the side, wall comprise a separate ventilation and/or pressure medium supply, respectively.

According to one embodiment of the present invention the form member is a plate, which reciprocates between a filling and a discharge position. Such a forming plate is for example described in EP 0 818 148 A1. This patent application is hereby included by reference so that its description is part of the present description.

In this patent application a forming machine is described with a spring element, for example an o-ring which presses the pressure member, here a pressure plate against the form member, here a from plate and the form member against a de-aeration member. The clearance between the pressure member, the form member and the de-aeration member is eliminated with the spring element and no leakage takes place. The pressure member has according to another or a preferred embodiment of the present invention cutting means such that the form product is cut when the form plate is moving from the filling to discharge position.

In order to insure a minimum surface pressure and still adequate sealing between the pressure member and the form member, the pressure member is preferably flexible, so that it equalizes roughness and/or unevenness in the surface of the forming plate.

Even more preferably, the pressure of the pressure element can be adjusted, for example by an inflatable O-ring. This ring can be inserted into an indentation in the surface of the pressure member. Its shape, preferably its diameter can be altered for example by pressurized air and/or pressurized water. The pressure of the pressure element is preferably controllable even more preferably controllable by a computer system. The pressure is preferably adjusted depending on the material of the form member and/or the material of the pressure plate, the wear of the form member and/or the pressure member and/or based on the food product to be formed. The pressure plate can comprise two or more pressure elements whose pressure can preferably be altered independently from each other.

In a preferred embodiment, the apparatus comprises a base member, whose surface preferably interacts with the pressure member. The pressure element is preferably located between the pressure member and the base member. More preferably, the surface adjacent to the pressure member is 3D-shaped, to assure a 3D-shaped product can be removed from the inventive apparatus, especially an apparatus with a form plate.

To ensure that especially fibrous food products as whole muscle meat, spinach or the like are not withdrawn from the mould during the movement of the form member, for example during the outgoing stroke, a knife preferably a knife with a serrated and/or waived blade in the pressure member is provided according to an inventive or preferred embodiment of the present invention. In order to assure high hygiene, the knife is preferable integrated into the pressure member itself; i.e. the pressure member and the knife are preferably one piece of material. Preferably; the pressure member comprises an opening through which the food product is fed into the moulds. The knife is preferably provided at the circumference of this opening. The blade of the knife is preferably produced by water-jet cutting. When the form member with its mould is fully charged with food product, the form member moves to its discharge position and passes the stationary mounted knife and the bottom side of the formed product and its fibers will be cut off.

According to another or a preferred embodiment of the present invention, the apparatus comprises an insertion unit to insert a stick into each patty. The stick is especially desirable in case, the food product is so called finger-food. More preferably, the means is a slot.

Preferably, the insertion unit is located at the front end of the form member, which is even more preferably a drum.

In a preferred embodiment of the present invention, the insertion unit is movable, preferably along at least a segment of a circular arc. Thus, the insertion unit can, for example, co-rotate together with a drum, so that the drum can be operated continuously.

In another preferred embodiment of the present invention, the food product forming apparatus comprises a cam that pushes the stick into the patty, while the form member, especially the drum, is advancing. The stick is only inserted into the cavity and/or the formed patty and then pushed into the patty by the cam. The cam can be shaped as a ramp. Preferably, the cam is located at the front end of a drum.

Preferably, the stick is inserted into the food product during the movement of the form member from the filling to the discharge position. Another subject matter of the present invention is therefore a process for the insertion of a stick into a patty, which are formed in a forming member, whereas the stick is inserted while the forming member advances. Another subject matter of the present invention is a process for the insertion of a stick into a patty, which is formed in a forming member, whereas the stick is at least partially inserted while the forming member advances and/or whereas the stick is moved relative to the forming member for insertion into the patty by an insertion unit.

In a preferred embodiment of the inventive process, the forming member is a drum. Preferably, the rotation is stopped or maintained during the insertion of the stick.

Preferably, the insertion of the stick in one row and filling of the cavity in another row takes place at least partially simultaneously.

The inventions are now explained in further more detail according to Figures 1 - 13. These explanations do not limit the scope of protection.
- **Figures 1 - 4**: show one embodiment of the inventive apparatus.
- **Figures 5 and 6**: show the inventive pressure member.
- **Figure 7**: shows another embodiment of the inventive apparatus.
- **Figure 8**: shows further details of the apparatus according to figures 1 - 4.
- **Figure 9**: show the stick insertion.
- **Figures 10-12**: show another embodiment of the apparatus with stick insertion.
- **Figure 13**: shows a movable insertion unit.

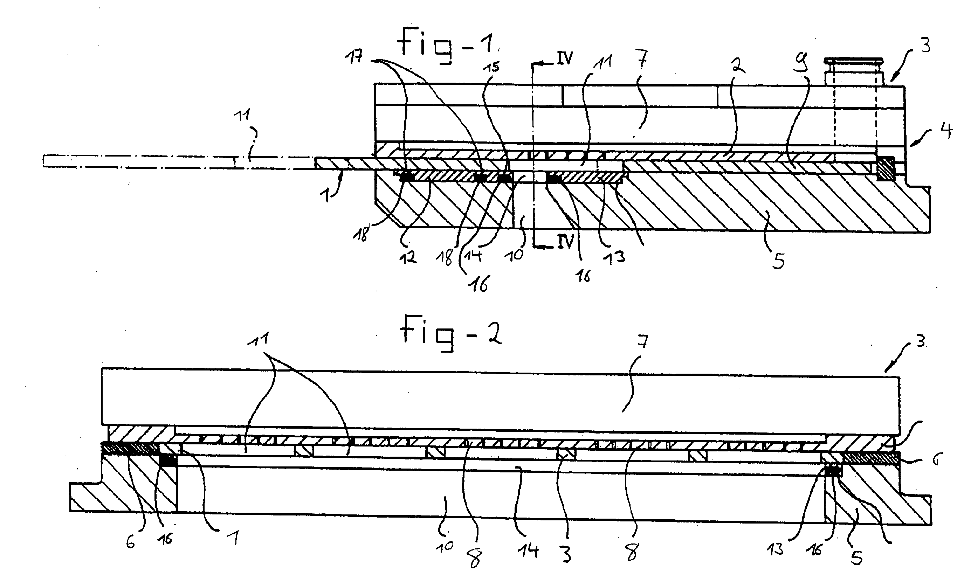

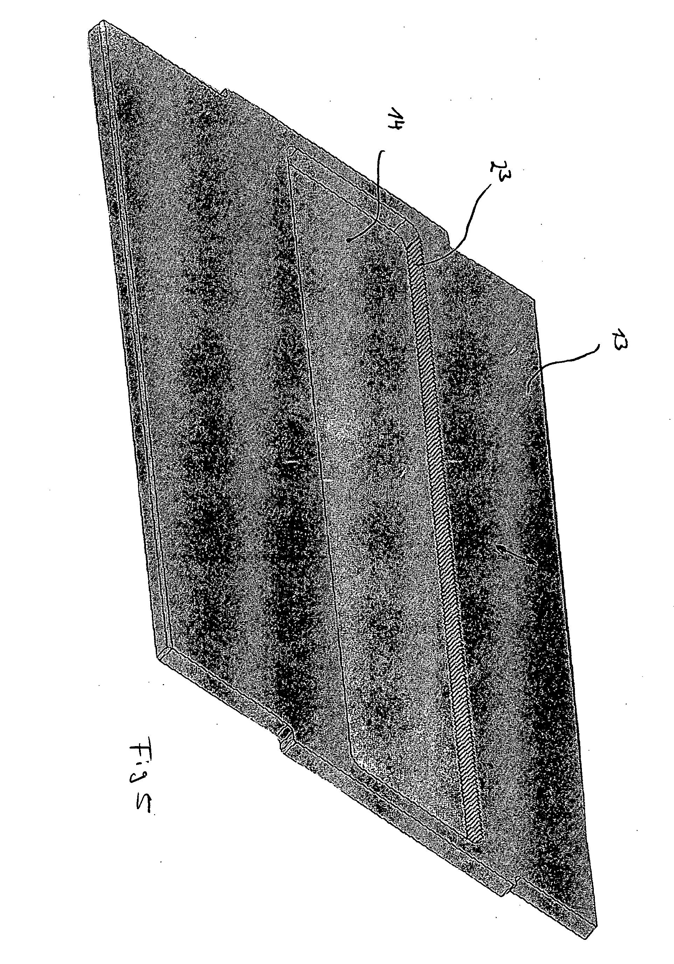

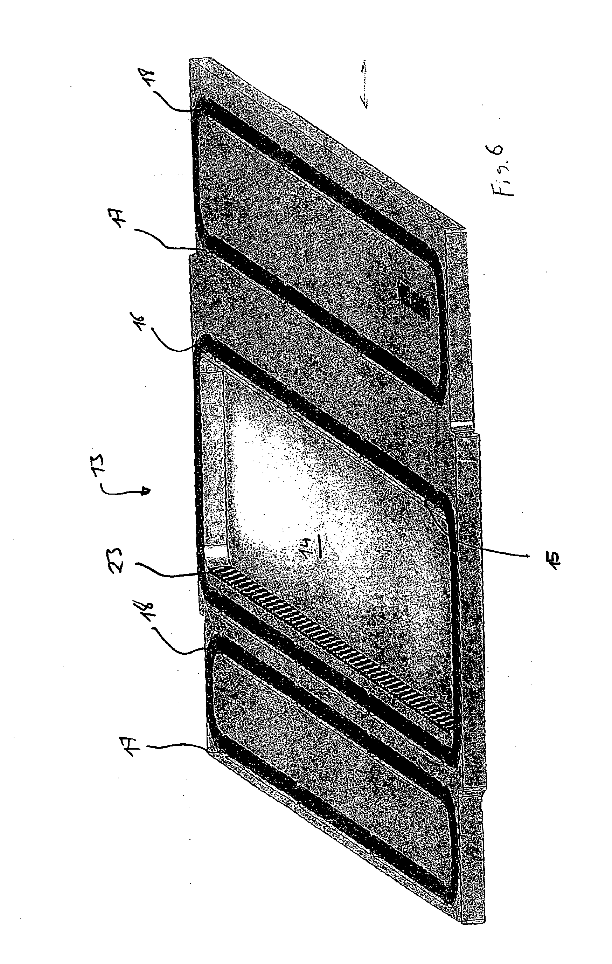

Figures 1 - 4 show one embodiment of the inventive forming apparatus. As can be seen from Figures 1 and 2, the forming apparatus 3 has a housing, which is denoted overall by 4 and comprises a base member 5, here a plate, a de-aeration member 2, here a plate, lateral guides 6 between these two components (see Figure 2) and a closure member 7 which holds the parts 2, 5 and 6 pressed against one another. The de-aeration member 2 has ventilation holes 8. The holes 8 can be utilized to allow the ventilation of the mould 11 during its filling to remove entrapped air. The holes 8 can also be used to eject a gas, for example air into the mould to create an air cushion to reduce sticking of the patty in the mould. The lateral guides 6, the base member 5 and the de-aeration member 15 delimit a chamber 9, in which the form member 1 can be displaced between a position moved inwards, which is shown in continuous lines, and a position moved outwards, shown by broken lines. The inward position of the form member is the so called filling position in which a mould is filled with food mass. The outward position is the so called discharge position, in which the formed patty is discharged from the form member 11. The base member 5 has a feed opening 10 which is connected to the feed of the food mass (not depicted). In the moved-in position of the form member 1, the moulds 11 arranged therein are in communication with the feed opening 10. According to the invention, the base member is preferably provided with a recess 12, in which a pressure member 13, here a plate is situated. The stationary pressure member 13 is shown in more details in Figures 5 and 6 and has an opening 14 which is aligned with the feed opening 10 in the base member 5. A groove 15 is arranged around this feed opening 14, in which groove a likewise encircling spring element 16, for example a rubber ring or an O-ring, is situated. This spring element is supported on the base member 5, on its region around the feed opening 10. The pressure force resulting from the spring element 16 is preferably adjustable, so that on one hand the feed opening is sealed but on the other hand the sealing force is not too high, to avoid wear of the spring element 16, the form member 1 and/or the pressure member 13 and/or to improve the sealing. The adjustment of the pressure force can be, for example, achieved with a hollow O-ring, into which a pressure fluid is filled. The pressure fluid changes the diameter of the O-ring and thus the pressure force. Preferably, the spring element is computer-controlled. As a result, the pressure member 13 is held firmly pressed against the form member 1, so that any play of the said form member 1 in the internal chamber 9 in the housing 4 is eliminated, in the region of the feed opening 10. The spring element 16 also seals the gap between the pressure member 13 and the recess 12. By dint of this resilient pressure, scarcely any leakage now takes place between the pressure member 13 and the form member 1. Moreover, this pressure member 13, interacting with the form member 1, also has a cutting action, such that the fibers of the mass, such as meat fibers, are reliably severed when the form member 1 is displaced to its outwardly projecting position. In order further to improve the seal of the pressure member 13 with respect to the form member 1, preferably a further groove 17 is provided, in which an additional spring element 18 is situated. The pressure force of this spring element 18 is preferably also adjustable as described above.

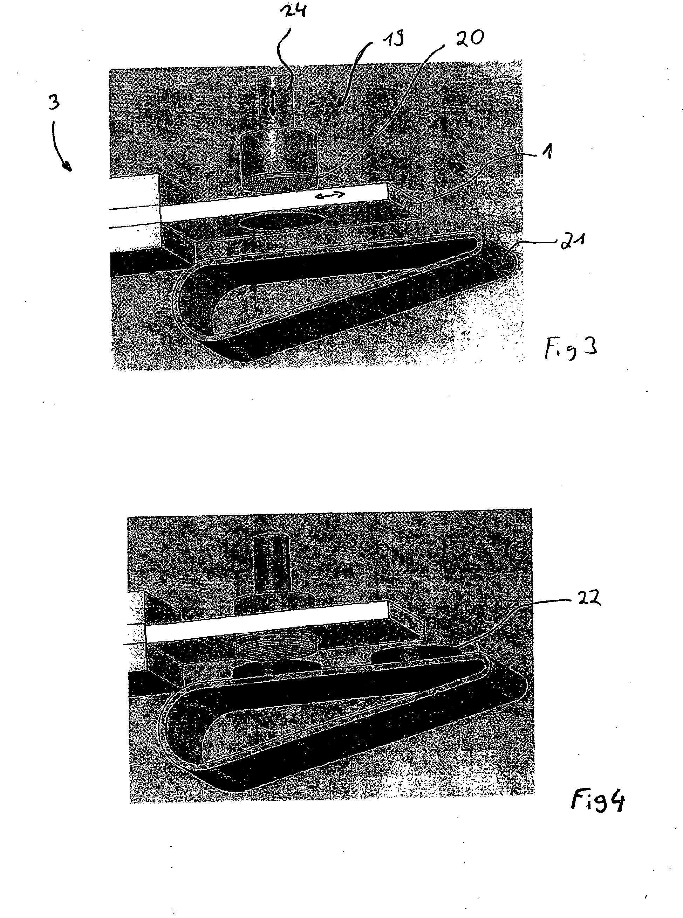

Figures 3 and 4 show details of the inventive forming apparatus 10 according to figures 1 and 2. This forming apparatus 10 comprises a forming member 1, here a plate, which reciprocates between a filling-position in which the moulds 11 in the plate 1 are filled with the food product and a discharge position in which the formed food products 22, the patties, are removed from the form member 1. The movement of form member 1 is depicted by the double arrow on the plate. Figures 3 and 4 depict the discharge position of form member 1. The inventive apparatus 10 preferably comprises a knock out cup 19 which is connected to a piston 24. The knock out cup 4 moves from a start-position to a knock-out-position and back as shown by the double arrow on piston 24. The knock out cup 19 comprises at its bottom a perforated plate 20 which is permeable for a fluid medium, preferably gas and/or water. Figure 3 shows the knock out cup in its start position. Figure 4 shows the knock out cup after it has come into contact with the food product 22 in form member 1 and after it has moved through the form member 1 and has knocked out the food product 22 out of form member 1. After the food products 22 have been removed from form member 1, they fall on a transportation belt 21 and are transported to the next processing step. The person skilled in the art understands, that form member 1 can comprise a multitude of moulds and correspondingly a multitude of knock out cups. The knock out cup can be driven individually or together in groups. The person skilled in the art furthermore understands that form member 1 can be substituted by a intermittently or continuously rotating drum with holes in it. In this case, the knock out cups are located preferably at the inside of the drum. The person skilled in the art further understands that the depiction of the patties 22 is simplified and that they can have a 3D-shape. In the case, the bottom of the knock out cup, here the plate 20, needs to have a corresponding shape.

Figures 5 and 6 show details of the pressure member 13, which is here a pressure plate. This plate 13 is stationary and the top surface depicted in figure 5 is adjacent to the form member. The movement of the form member is depicted by a double arrow. As described previously, the pressure member 13 comprises an opening 14 through which the food mass is fed into the moulds. This opening comprises a circumference into which at least partially, the blade 23 has been worked. The blade 23 cuts the food product, for example fibers of the food product for example muscle-fibers, during the movement of the form member, especially during the outgoing movement of the form plate into the discharge-position. The blade 23 is located in the pressure member 13 such, that the inner surface of the formed patty and/or inner surface of mould moves entirely across the blade during the movement of the form member. A person skilled in the art understands that for forming a 3D-product it can be necessary to shape the pressure plate 3 dimensionally too. In this case, the blade is also 3D-shaped. The plate is preferably worked directly into the material of the pressure-member, i. e. the blade and the pressure member are made out of one piece. Preferably, the blade is serrated and/or waved. Preferably, the blade is produced by water-jet-cutting.

Figure 6 shows the backside of the pressure plate according to figure 5. On this side, grooves 15 and 17 have been worked into the plate which hold spring elements 16, 18 respectively. These spring elements are in the present case O-rings, which are preferably adjustable in their diameter as described above.

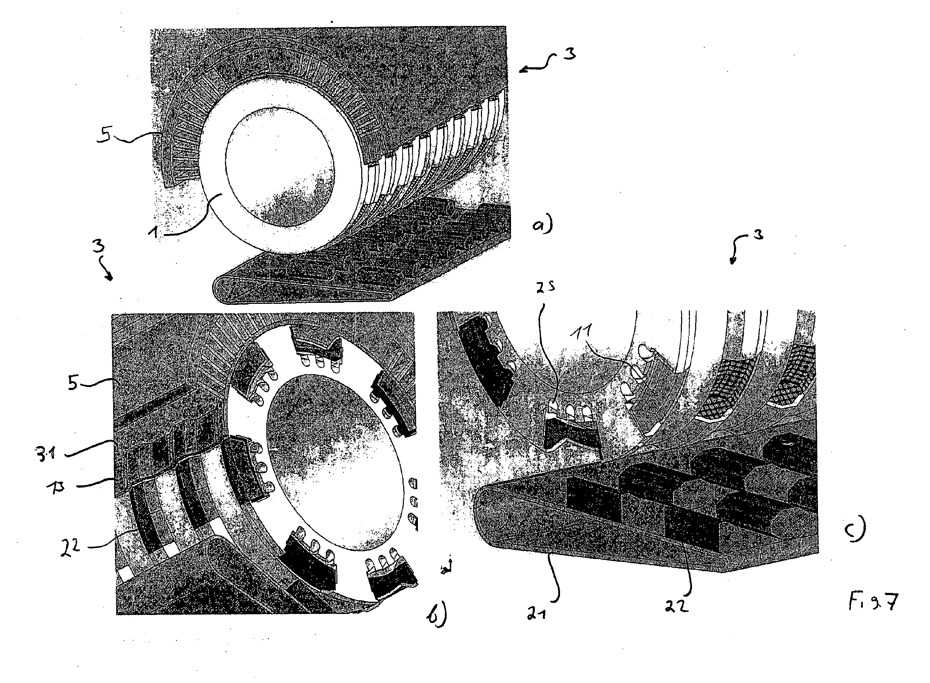

Figure 7 shows another embodiment of the inventive forming apparatus.

The disclosure made regarding figures 1-6 also applies to this embodiment. In this case, the form member 1 is a drum that rotates continuously or intermittently. The circumference of the drum comprises several moulds 11, which are located at different angular positions and which are preferably also located in parallel, in rows along the axial extension of the drum. The moulds 11 comprise in the present case porous inserts which are embedded in the drum. Each mould 11 is connected to a channel system 25, 28 through which the individual mould can be vented and/or through which a pressurized medium can be ejected in order to remove the formed patties 22 from the moulds 11.

The inventive forming apparatus, further comprises a filling shoe which surrounds the circumference of the drum partially. It can be seen especially from figure 7a, that this shoe comprises adjacent to the circumference of the drum a pressure plate 13, which is in the present case 3D-formed in order to produce 3D-shaped patties 22 which can be especially seen in figure 7c. Between a base member 5 and the pressure plate 13, pressure transfer means 21, here lamellas, are located, which transduce a pressure from the base member 5 to the pressure member 13. The pressure member 13 is made in the present case of a flexible material so that is always in contact with the surface of the drum. The base member 5 comprises pressure means for example spring elements to press the pressure plates against the drum. These spring elements are preferably as already discussed above adjustable more preferred by a computer system. The drum rotates continuously from a filling position in which the food material is fed into the moulds, to a discharge position, which is depicted in figure c. In this discharge position, the formed patties 22 are discharged on a transportation belt 21 and transported away.

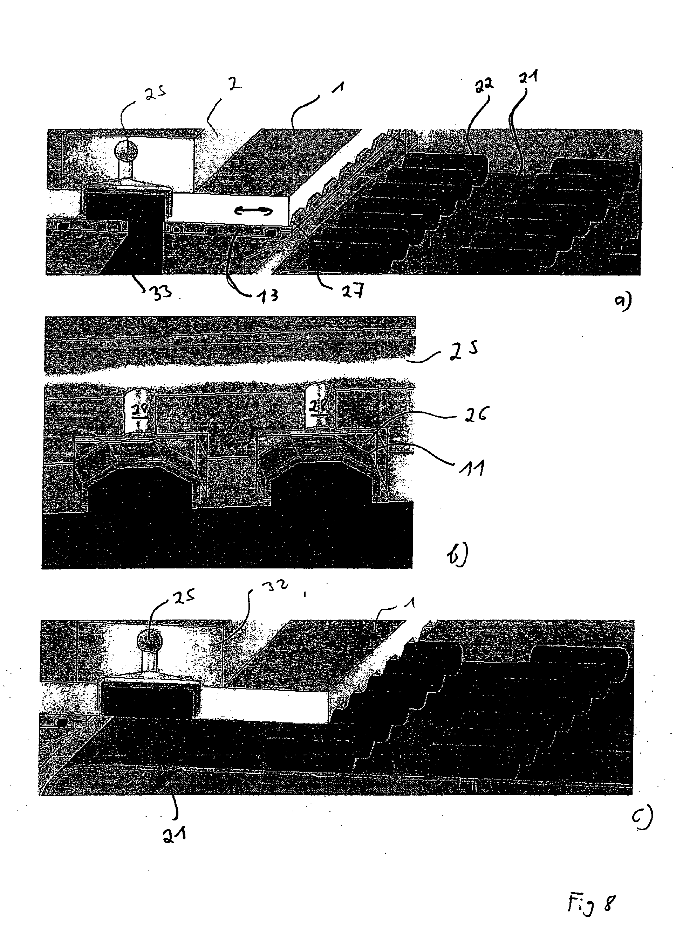

Figure 8 shows further details of the embodiment of the inventive forming apparatus according to figures 1-4. In figure 8a, a form plate 1 is depicted in its filling position. In this filling position, a food mass 33 is fed into the individual moulds of the mould plate, which are located in parallel in a row. Below the forming plate is a pressure plate 13, which is in the present case 3D-formed; i. e. comprises indentations in order to allow the production of 3D-shaped products which are in the present case sticks with a regular poly-angular diameter. In order to allow ventilation of the mould during its filling, the mould, which comprises in the present case a porous insert, as can be seen in figure 8b, is connected to a channel system 25, 28 which can be connected for example to the ambient and allows the removal of the entrapped air. As depicted by the double arrow on the form plate 1, the form plate is movable from the depicted filling position into a discharge position, which can be seen in figure 8c. Figure 8b shows details of moulds 11, which are as already said, made from porous material. In the present case, the moulds are inserts, which are inserted into a cavity 26. Each of these cavities 26 is connected to a channel 25 via a branch 28. The branch 28 and/or the channel 25 is located in a de-aeration plate 2. Figure 8c shows the form plate in its discharge position. Here, the moulds are connected via channels 25 to a pressure medium for example pressurized air which ejects the formed food patties 22 out of the moulds 11. The channel 25 is here part of a stationary ejector 32. It can be especially seen from figure 8c, that the surface of the form plate 1, which is adjacent to the pressure plate 13 is also 3D-formed, whereas the indentations of the pressure plate fit into convexities of the form member and vice versa.

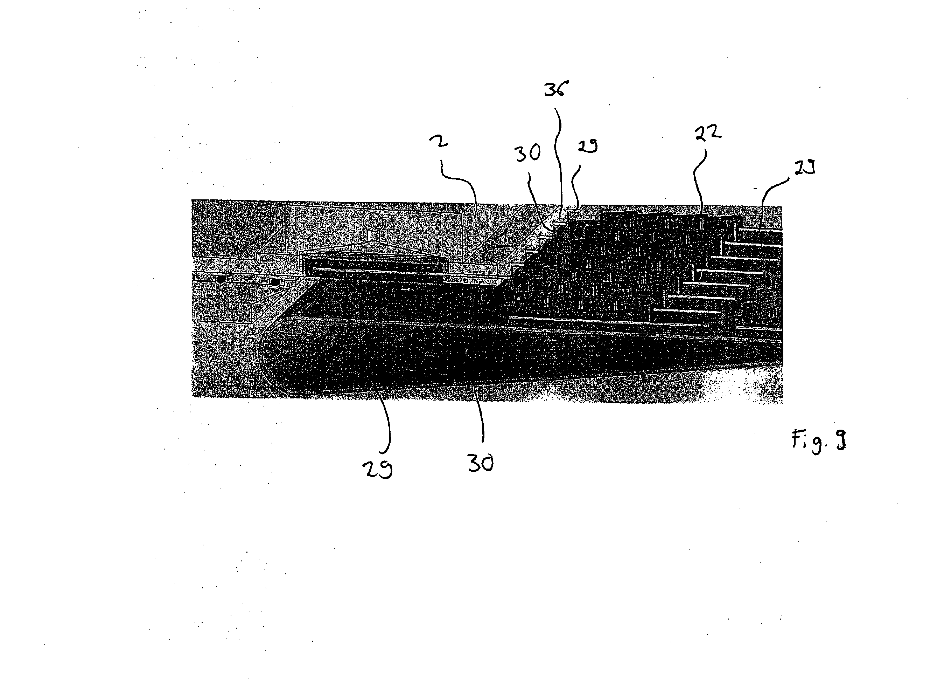

Figure 9 shows the insertion of a stick 29 into the formed food patties 22. The insertion of the stick takes place during the movement of the form member 1 from the filling- to the discharged position or after the form member has reached the discharge position. The person skilled in the art understands that the sticks can be stationary and/or can be moved to utilized the insertion of the sticks 29. The sticks 29 are inserted into the patties via a slot 30. By means of this slot the patties and the sticks can be ejected in the discharge position.

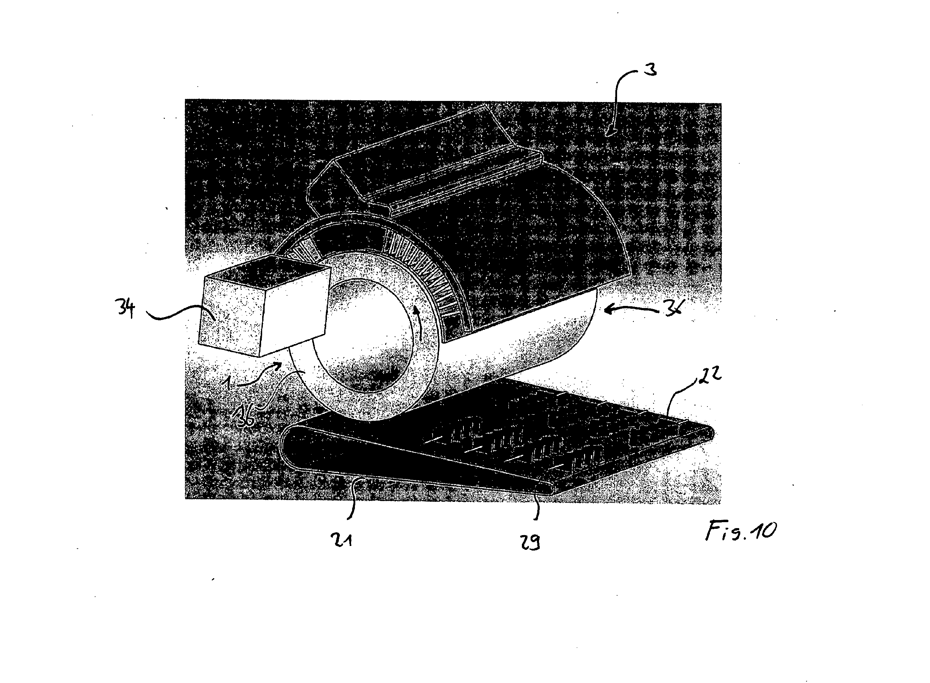

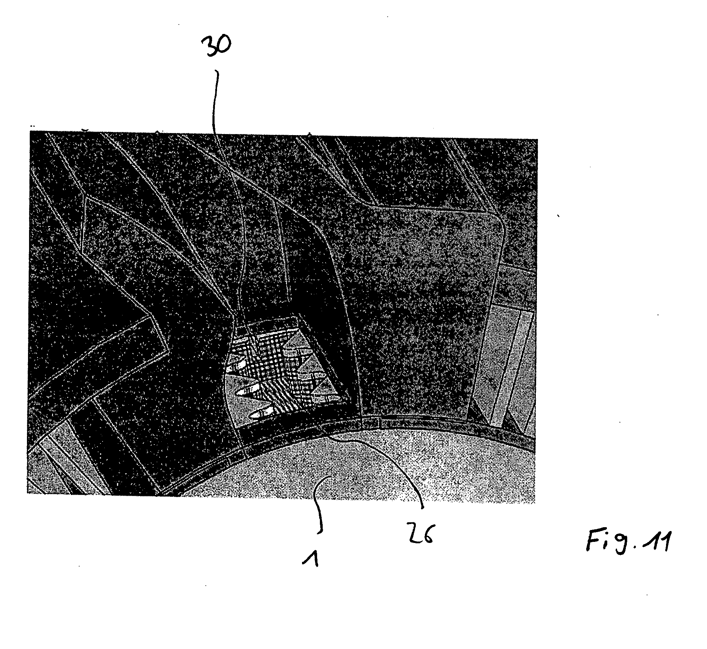

Figures 10 - 12 show another embodiment of the inventive apparatus 3, which comprises in the present case a drum 1, which rotates, as indicated by the arrow, counterclockwise. The drum comprises cavities 26, in which patties can be formed. Furthermore, the inventive apparatus comprises at both of its front ends stick insertion units 34, respectively, whereas each inserts sticks into the patties 22. The patties 22 with its sticks 29 inserted are subsequently discharged on a transportation belt 21 and transported away from the inventive apparatus. As can be especially seen from figure 11, each cavity 26 is connected to an opening, here a slot 30, through which the stick 29 is inserted into the patty, which is formed in the cavity 26. In the present case, the cavity 26 is made from a porous material.

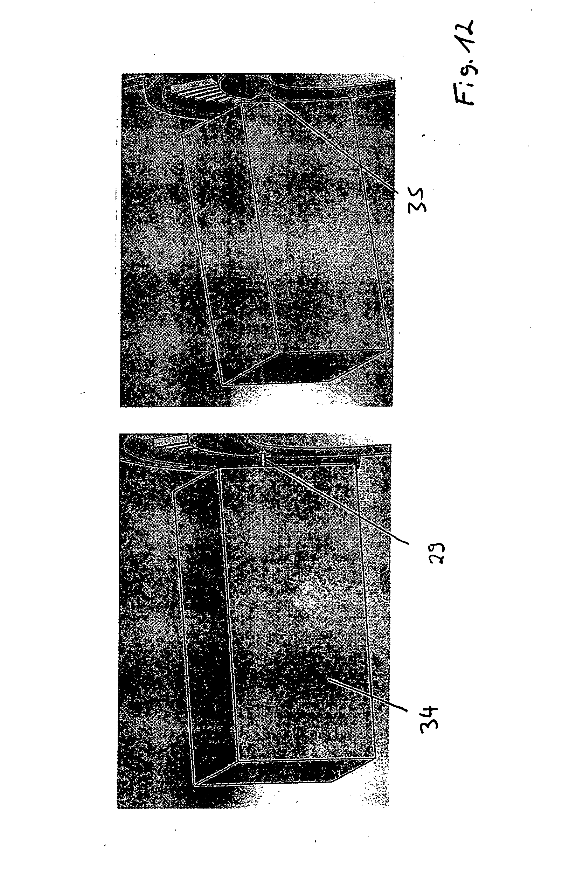

Figure 12 shows details of the stick insertion unit 34, which comprises in the present case an insertion pin 35, which pushes stick 29 into the cavity 26 and thus into the formed patty. The stick insertion unit 34 can be either provided stationary or moveable. In case that the stick insertion unit 34 is stationary, the rotation of the drum must be stopped while the stick is inserted into the patty. In case that the insertion unit 34 is moveable, it preferably moves along a segment of a circular arch, while it inserts the stick into the cavity. As soon as this is finalized, the insertion unit 34 moves back into its home position and then pushes another stick into the patty. In a preferred embodiment, the inventive apparatus comprises a multitude of rows of cavities along its circumference. Preferably, while in one row the stick is inserted, another row is filled with the patty forming material, at least partially simultaneously. This can be either done while the form member is moving or while it is stationary.

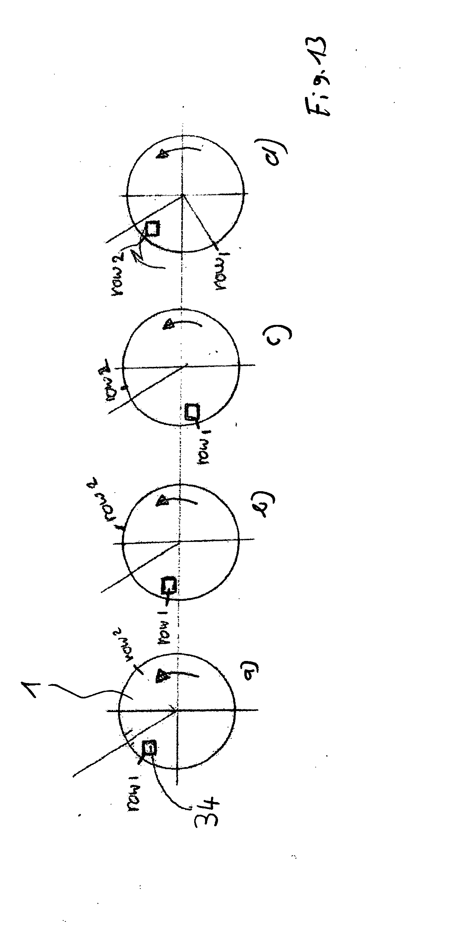

In figure 13, a moveable insertion unit 34 is depicted: In figure 13a the insertion unit is shown in its home position. The form member 1, in the present case a drum, comprises a multitude of rows with at least one cavity. The drum rotates counter clockwise. As soon as row 1 has reached the insertion unit 34, they co-rotate. During this co-rotation (please compare figures 13b and 13c) the stick is inserted into the cavity and thus into the patty. As soon as this is finalized (please compare figure 13c), the insertion unit rotates clockwise (please compare figure 13d) into its home position and then starts co-rotating with row 2 in order to insert a stick into the cavity of this row. Preferably, the rotation into the home position is faster than the co-rotation during the insertion of the stick.

### List of reference signs:

- 1: form member, plate, drum
- 2: de-aeration member
- 3: food product forming apparatus
- 4: housing
- 5: base member
- 6: guides
- 7: closure member
- 8: ventilation holes
- 9: chamber
- 10: feed opening
- 11: mould, insert
- 12: recess
- 13: pressure member
- 14: opening
- 15: groove
- 16: pressure element, spring element
- 17: groove
- 18: pressure element, spring element
- 19: knock out cup
- 20: permeable bottom
- 21: transportation means, transportation belt
- 22: patty
- 23: blade
- 24: piston
- 25: channel
- 26: cavity
- 27: indentation
- 28: branch
- 29: stick
- 30: opening, slot
- 31: pressure transfer means, lamellas
- 32: ejector
- 33: food mass
- 34: stick insertion unit
- 35: insertion pin
- 36: front end of the forming member

## Claims

1. Food product forming apparatus (3) to produce patties (22) with a form member (1) which comprises a mould (11) in which the patties are formed, whereas the form member (1) is located adjacent to a pressure member (13) and is at least partially made from a porous material (11), **characterized in, that** the pressure element is 3D-shaped.

2. Food product forming apparatus (3) according to claim 1, **characterized in, that** it comprises a base member (5), **characterized in that** the surface of the form member, which interacts with the pressure member, is 3D-shaped.

3. Food product forming apparatus (3) according to one of the preceding claims, **characterized in, that** it comprises a, preferably adjustable, spring element (16, 18) between the base element (5) and the pressure member (13).

4. Food product forming apparatus (3) according to the preamble of claim 1 or preferably one of the preceding claims, **characterized in, that** the a blade (23) is at least partially integrated in the pressure member (13).

5. Food product forming apparatus (3) according to claim 4, **characterized in, that** the pressure member (13) comprises an opening (14) and that the blade (23) is located at the circumference of the opening (14).

6. Food product forming apparatus (3) according to claims 4 or 5, **characterized in, that** the blade (23) is cut into the pressure member, preferably by water-jet-cutting.

7. Food product forming apparatus (3) according to claims 4 - 6, **characterized in, that** the knife (23) is serrated and/or waved and/or straight.

8. Food product forming apparatus (3) according to the preamble of claim 1 or one of the preceding claims, **characterized in, that** comprises means (30) to insert a stick (29) into each patty (22).

9. Food product forming apparatus (3) according to claim 8, **characterized in, that** the means (30) is a slot.

10. Food product forming apparatus (3) according to one of the preceding claims, **characterized in, that** vacuum is applied to the form member to avoid unintentional release of the patty (22).

11. Food product forming apparatus (3) according to one of the preceding claims, **characterized in, that** water is applied to the form member (1) after the patties (22) have been released.

12. Food product forming apparatus (3) according to one of the preceding claims, **characterized in, that** form member is a plate or a drum.

13. Food product forming apparatus (3) according to one of the preceding claims, **characterized in, that** several rows of patties are produced simultaneously.

14. Food product forming apparatus (3) according to one of the preceding claims, **characterized in, that** the inserts (11) are connected to the ambient and/or a pressure-medium-system (25, 26, 28).

15. Food product forming apparatus (3), preferably according to one of the preceding claims, **characterized in, that** it comprises a stick insertion unit (34).

16. Food product forming apparatus (3) according to claim 15, **characterized in, that** the unit is located at the front end (36) of the form member (1), preferably a drum.

17. Food product forming apparatus (3) according to claims 15 or 16, **characterized in, that** the insertion unit is movable, preferably along at least a segment of a circular arc.

18. Food product forming apparatus (3) according to claims 15 - 17, **characterized in, that** it comprises a cam that pushes the stick into the patty, while the form member is advancing.

19. Process for the insertion of a stick into a patty, which is formed in a forming member (1), **characterized in, that** the stick (29) is at least partially inserted while the forming member (1) advances and/or that the stick (29) is moved for insertion into the patty (22) by an insertion unit (34, 35).

20. Process according to claim 18, **characterized in; that** the forming member (1) is a drum and that its rotation is stopped or maintained during the insertion of the stick (29).

21. Process according to claim 19; **characterized in, that** the insertion of the stick (29) in one row and filling of the cavities in another row takes place at least partially simultaneously.
